# DEMANDE DE BREVET EUROPEEN

(11) **EP 4 748 642 A1**
(43) Date de publication de la demande: **27.05.2026**
(21) Numéro de dépôt: 25210880.8
(22) Date de dépôt: 23.10.2025
(51) Int. Cl.: B60N 2/75, B60R 21/207

(54) **SIÈGE DE VÉHICULE COMPRENANT UN ACCOUDOIR COMPATIBLE AVEC UN DÉPLOIEMENT DE SAC GONFLABLE LATÉRAL**

(30) Priorité: 25.11.2024 FR 2412949
(71) Demandeur: Renault s.a.s, 92100 Boulogne Billancourt (FR)
(72) Inventeur: FRABOLOT, Amerine, 78280 Guyancourt (FR); LE-GOFF, Joran, 91640 Briis sous Forges (FR); ROY, Jean-Baptiste, 78280 Guyancourt (FR)

(57) **Abrégé**

Siège de véhicule comprenant une armature de dossier (1), équipé d'un sac gonflable d'un premier côté, avec un accoudoir (6) relié via un montage articulé à l'armature de dossier (1), l'accoudoir étant aussi situé sur le premier coté, l'accoudoir étant déplaçable entre une première position (P1) et une deuxième position (P2), l'accoudoir comprenant une première portion s'étendant selon une première direction d'extension et une deuxième portion prolongeant en oblique la première portion selon une deuxième direction d'extension, les première et deuxième positions (P1,P2) étant mécaniquement stables et indexées alors que toutes les positions intermédiaires sont mécaniquement instables, le montage articulé comprenant un organe élastique pour rappeler l'accoudoir vers la première position ou vers la deuxième position, chacune des première et deuxième positions laissant libre un volume nécessaire au déploiement du sac gonflable depuis une zone latérale du dossier sur le premier côté.

## Description

La présente invention se rapporte aux sièges de véhicule comprenant un accoudoir. Dans les véhicules automobiles, il est fréquent de prévoir un accoudoir sur le siège conducteur, cet accoudoir étant agencé du côté droite pour les véhicules à conduite à droite et du côté gauche pour les véhicules à conduite à gauche. Autrement dit, l'accoudoir est situé du côté intérieur par rapport au siège conducteur. Nous nous intéressons aux cas où un tel accoudoir est monté sur l'armature de dossier du siège.

Par ailleurs, il est prévu des moyens de protection de sécurité passive, notamment des sacs gonflables qui se gonflent en une fraction de seconde en cas de nécessité suite à survenance d'un choc subi par le véhicule.

On utilise pour désigner un tel sac gonflable dans le métier et dans le langage commun le terme 'airbag'. De même, on utilise pour désigner le système de protection de sécurité passive le terme 'système airbag'.

Il est connu d'installer un sac gonflable dans le dossier du siège, sur le côte, pour contribuer à la protection latérale de l'occupant présent sur le siège en question.

En particulier, il est connu d'installer un sac gonflable du côté extérieur du siège, c'est-à-dire du côté où se trouve la carrosserie qui sépare l'intérieur du véhicule de l'extérieur du véhicule.

Il est apparu un besoin de proposer en outre un sac gonflable du côté intérieur du siège, c'est-à-dire du côté où se trouve l'accoudoir.

Cependant, les solutions d'accoudoir classiques ne sont pas compatibles avec un fonctionnement à coup sûr du déploiement dudit sac gonflable. Les inventeurs ont cherché à répondre à ce besoin.

A cet effet, il est proposé ici un siège de véhicule comprenant une armature de dossier montée pivotante sur une armature d'assise, le siège de véhicule étant équipé d'un sac gonflable d'un premier côté (particulièrement du côté intérieur), le siège de véhicule étant situé dans un repère spatial orthogonal comprenant une direction verticale, une direction longitudinale et une direction transversale, le siège de véhicule comprenant un accoudoir relié via un montage articulé à l'armature de dossier l'accoudoir étant situé sur le premier coté,
l'accoudoir étant déplaçable entre une première position, dite abaissée et une deuxième position, dite relevée,
l'accoudoir comprenant une première portion s'étendant depuis le montage articulé selon une première direction d'extension et une deuxième portion prolongeant la première portion selon une deuxième direction d'extension inclinée angulairement par rapport à la première direction d'extension,
les première et deuxième positions étant chacune mécaniquement stables et indexées alors que toutes les positions intermédiaires étant généralement mécaniquement instables, le montage articulé comprenant un organe élastique pour rappeler l'accoudoir vers la première position ou vers la deuxième position, chacune des première et deuxième positions laissant libre un volume nécessaire au déploiement du sac gonflable depuis une zone latérale du dossier sur le premier côté.

En pratique l'accoudoir se présente généralement avec une forme en L, la première portion est la plus petite et se trouve dans la position normale d'utilisation en posture montante depuis l'articulation, la deuxième portion étant plus longue et se trouvant dans la position normale d'utilisation en position horizontale ou légèrement descendante vers l'avant, apte à supporter confortablement un avant bras du conducteur. Nous verrons plus loin que la forme en L ne présente pas nécessairement un angle droit à l'intersection des deux portions. De plus, la course angulaire disponible entre la première position abaissée et la deuxième position relevée sera discutée plus bas.

Grâce aux dispositions exposées ci-dessus, on propose une configuration qui combine astucieusement la présence d'un accoudoir relevable du côté intérieur du siège et d'un airbag latéral du même côté dudit siège.

Avantageusement, le montage articulé est tel que les positions intermédiaires de l'accoudoir entre la position abaissée et la position relevée sont instables et ne peuvent pas être maintenues. Même si ces positions intermédiaires pourraient occasionner une gêne pour le déploiement du sac gonflable, ces positions ne peuvent exister que lors d'une manœuvre volontaire du conducteur, et ne peuvent pas prévaloir dans les conditions normales de conduite du véhicule.

Concernant la forme de l'accoudoir, la partie interposée entre la première portion et la deuxième portion peut former une zone intermédiaire coudée.

Selon une réalisation, le montage articulé est une articulation à pivotement, de préférence à axe transversal.

Il s'agit d'un montage mécaniquement simple, la cinématique de l'accoudoir entre la position abaissée et la position relevée est intuitive pour l'utilisateur.

On remarque que l'axe de l'articulation à pivotement se trouve plus basse que l'articulation à pivotement d'un accoudoir conventionnel de forme généralement rectiligne. Ce décalage vers le bas de l'axe de rotation permet une libération de l'espace sur le côté du dossier favorable au déploiement efficace et répétable du sac gonflable airbag. Astucieusement, c'est la forme en L de l'accoudoir qui permet ce décalage de l'articulation vers le bas.

Il faut remarquer que le montage articulé pourrait reposer sur un système différent d'une articulation de pivotement, par exemple le montage articulé pourrait utiliser une cinématique à base de quadrilatère déformable, e.g. une configuration de mécanisme à quatre barres.

Selon une réalisation, concernant le montage à pivotement, la première position est séparée angulairement de la deuxième position par un écart angulaire (θc) compris entre 90° et 120°.

Selon une réalisation particulière, cet écart angulaire peut être choisi voisin de 110°.

Grâce aux dispositions ci dessus, quand l'accoudoir est relevé, la 2e portion de l'accoudoir se retrouve en arrière par rapport au flanc du dossier, libérant ainsi le passage de déploiement du sac gonflable si celui-ci vient à se déployer.

Selon une réalisation, il est prévu une course angulaire entre la première position et la deuxième position, avec une première plage angulaire où l'accoudoir est rappelé par l'organe élastique vers la première position, et une deuxième plage angulaire où l'accoudoir est rappelé par l'organe élastique vers la deuxième position.

Selon une réalisation, le montage articulé comprend une platine de fixation à l'armature de dossier.

Avantageusement, la platine comprend des trous de fixation qui se trouvent en face de trous déjà prévus sur le flasque latéral de dossier.

On remarque que le système d'accoudoir promu ici peut être proposé comme une option montée ou pas, selon l'équipement du siège et/ou du véhicule

La platine est la seule interface mécanique du système d'accoudoir avec le dossier du siège, elle présente une robustesse importante. A noter que les trous dans le flasque latéral de l'armature de siège peuvent être déjà existants.

Selon une réalisation, le montage articulé comprend un étrier (5) soudé sur la platine, l'étrier contribuant à l'indexation des chacune des première et deuxième position. L'étrier fait office de butée angulaire pour les positions relevée et abaissée, et l'étrier forme le support de fixation du palier tubulaire dans lequel tourne l'arbre, le palier tubulaire reprenant l'essentiel des efforts transmis par l'accoudoir au dossier de siège.

En effet, l'accoudoir est monté dans un système de montage en porte-à-faux.

Selon une réalisation, le montage articulé comprend un arbre solidaire de l'accoudoir, l'arbre étant muni d'une came coopérant avec l'organe élastique formé comme un ressort coopérant avec la came.

Le ressort peut être un ressort travaillant en compression, comme par exemple un ressort hélicoïdal, ou bien un ressort travaillant en flexion comme par exemple un ressort à lame.

Selon une réalisation, le montage articulé comprend un seul organe élastique, qui permet d'assurer l'indexation des deux positions extrêmes de la course angulaire.

Selon une réalisation, il peut être prévu un galet poussé par un ressort de compression, le galet formant un suiveur de came qui appuie sur la came. Une telle solution à galets roulants présente un faible frottement et une bonne élasticité de rappel.

Selon une réalisation, l'arbre est reçu dans un palier tubulaire soudé sur l'étrier. On forme ainsi le degré de liberté en rotation en empêchant les autres mouvements de rotation. La translation selon Y peut être arrêtée par divers moyens, e.g. circlip, clavette, etc.

Selon une réalisation, il est prévu le long de la direction transversale un intervalle de garde entre la matelassure du dossier et l'accoudoir.

Selon une réalisation, l'intervalle de garde peut être d'au moins 3 mm, voire au moins 4 mm.

Avantageusement, on garantit ainsi qu'il n'y a pas de frottement entre l'accoudoir et le dossier de siège même en présence de housse de siège. Ceci permet de garantir que les positions intermédiaires seront suffisamment instables et rappelées à une des positions extrêmes de butée par le système de rappel élastique.

La présente invention vise aussi un véhicule automobile, comprenant un siège tel que décrit précédemment.

L'invention sera davantage détaillée par la description de modes de réalisation non limitatifs, et sur la base des figures annexées illustrant des variantes de l'invention, dans lesquelles :
- [Fig.1] représente schématiquement en vue de profil un siège de véhicule dans lequel la présente invention est mise en oeuvre, les deux positions angulaires extrêmes de l'accoudoir étant représentée sur la figure ;
- [Fig.2] représente schématiquement une vue éclatée de l'accoudoir et du montage articulé qui le relie à l'armature de dossier ;

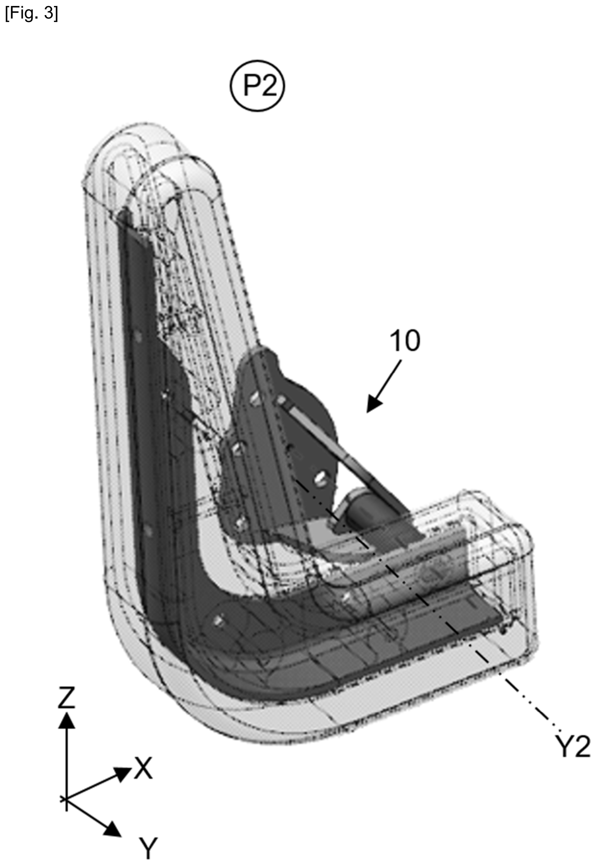

- [Fig.3] illustre schématiquement en perspective l'accoudoir en position relevée ;

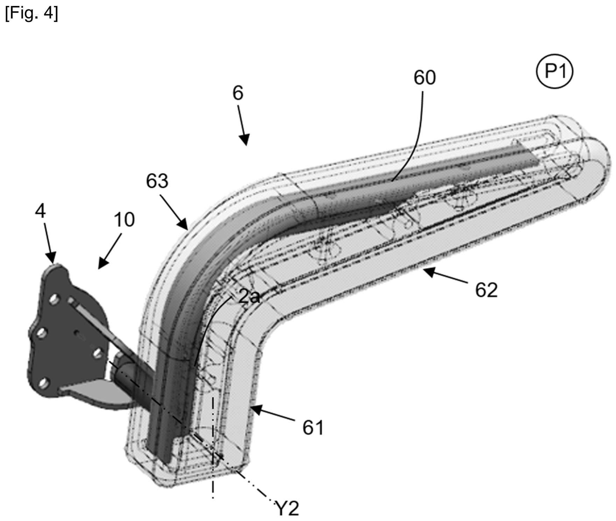

- [Fig.4] illustre schématiquement en perspective l'accoudoir en position abaissée ;
- [Fig.5] montre un exemple de montage articulé, en vue de face ;

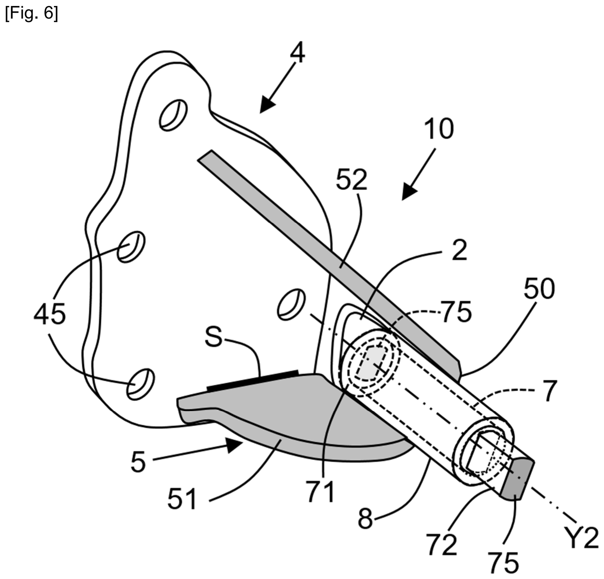

- [Fig.6] montre le montage articulé de la figure 5, en vue de perspective ;

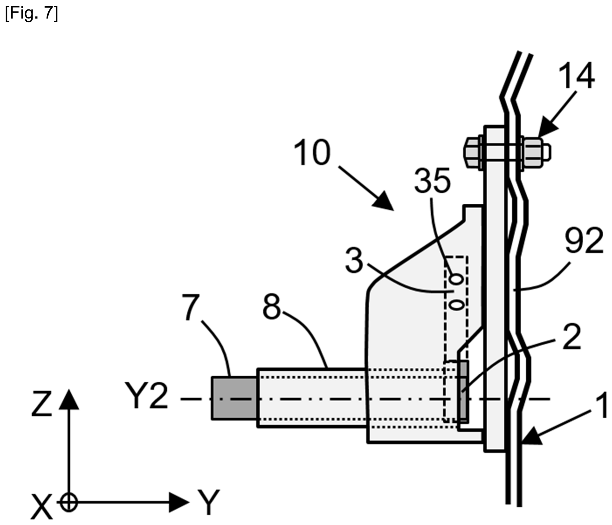

- [Fig.7] montre le montage articulé de la figure 5, en vue de profil ;
- [Fig.8] est un diagramme montrant un exemple de système de came et ressort avec l'accoudoir en position relevée ;
- [Fig.9] est un diagramme montrant l'exemple de la figure 8, illustrant le système de came et ressort avec l'accoudoir en position abaissée ;
- [Fig.10] est un diagramme montrant l'exemple de la figure 8, illustrant le système de came et ressort avec l'accoudoir en position intermédiaire ;
- [Fig.11] illustre schématiquement un exemple de déploiement du sac gonflable ;
- [Fig.12] montre en vue de face la zone latérale du dossier avec l'accoudoir relevé ;
- [Fig.13] illustre une autre un autre exemple de système de rappel élastique.

Sur les différentes figures, les mêmes références désignent des éléments identiques ou similaires. Pour des raisons de clarté de l'exposé, certains éléments ne sont pas nécessairement représentés à l'échelle.

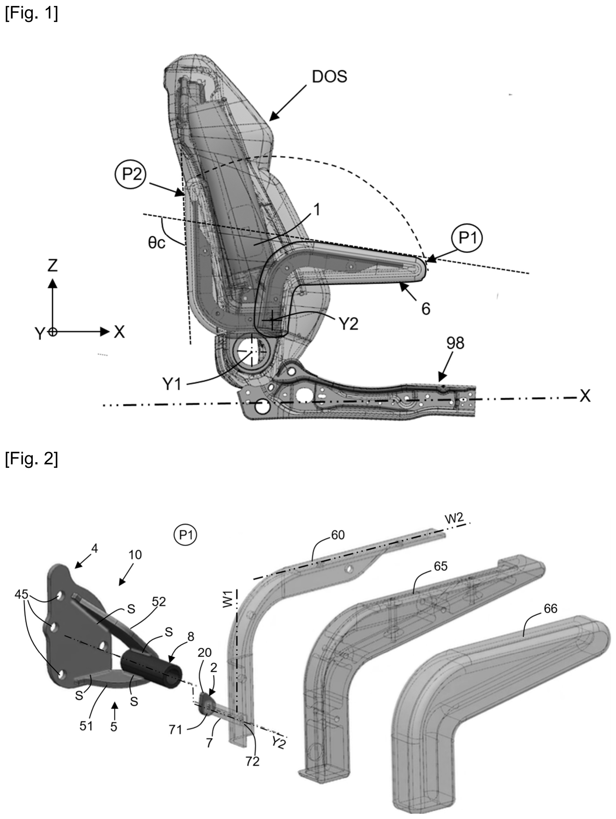

La figure 1 montre un siège de véhicule, dont on a représenté uniquement l'armature d'assise **98** et le dossier **DOS.**

Comme connu en soi, le dossier est monté sur l'armature d'assise avec un ajustement possible en inclinaison, c'est-à-dire en rotation autour d'un axe transversal noté **Y1.**

On remarque que l'invention vise tout type de véhicules automobiles, les véhicules en question pouvant être des véhicules particuliers, des véhicules utilitaires, des fourgons, des véhicules de loisirs. L'invention concerne en particulier le siège conducteur, mais elle peut aussi être appliquée sur les autres sièges du véhicule.

Le siège d'intérêt est équipé d'un accoudoir relevable, généralement repéré 6.

La position **P1** (dite première position) désigne la position normale d'utilisation, dans laquelle l'occupant du siège peut faire reposer son avant-bras sur le dessus d'une partie de l'accoudoir.

La position **P2** (deuxième position) désigne la position une position relevée. Dans cette position, l'espace occupé habituellement par l'accoudoir est libéré et le conducteur peut avoir un accès direct avec son bras au siège du passager sans gêne.

On a représenté aux figures un accoudoir situé du côté droit du siège.

Bien entendu, l'invention peut s'appliquer mutatis mutandis au côté gauche du siège notamment concernant le siège conducteur des véhicules à conduite à droite.

Sur les figures, le siège est repéré par rapport à un repère orthogonal suivant : la direction verticale est notée **Z,** la direction horizontale dite longitudinale est notée **X,** la direction horizontale dite transversale est notée **Y.**

Dans l'exemple représenté aux figures, l'accoudoir est monté pivotant par rapport au dossier autour d'un axe de pivotement **Y2** parallèle à la direction transversale Y.

L'axe de pivotement **Y2** de l'accoudoir en L se trouve en dessous de l'axe pivotement d'un accoudoir rectiligne conventionnel. L'axe de pivotement **Y2** de l'accoudoir en L se trouve au dessus de l'axe **Y1** d'inclinaison du dossier.

La course angulaire entre la première position **P1** et la deuxième position **P2** est ici voisine de 110°. D'une façon générale, la course angulaire disponible c'est-à-dire l'écart angulaire **θc** entre la première position et la deuxième position peut être choisie entre 90° et 120°.

Il faut aussi noter que bien que les figures représentent une solution de montage articulé basé sur un pivotement par rapport à un axe transversal, il n'est pas exclu de d'avoir recours à d'autres solutions cinématiques pour pouvoir déplacer l'accoudoir d'une position d'utilisation (abaissée) à une position relevée.

On peut ainsi énoncer que l'accoudoir **6** est relié à l'armature de dossier **1** via un montage articulé généralement repéré **10.**

L'armature de dossier **1** est généralement constitué de deux flasques latéraux qui s'étendent de haut en bas les deux flasques latéraux étant reliées solidairement par des traverses.

L'accoudoir **6** est monté sur un des deux flasques latéraux dans une configuration de montage en porte-à-faux. Dans l'exemple illustré, il s'agit du flasque latéral droit **92.**

Par ailleurs, le siège de véhicule est équipé d'un sac gonflable ('airbag') du même côté du dossier.

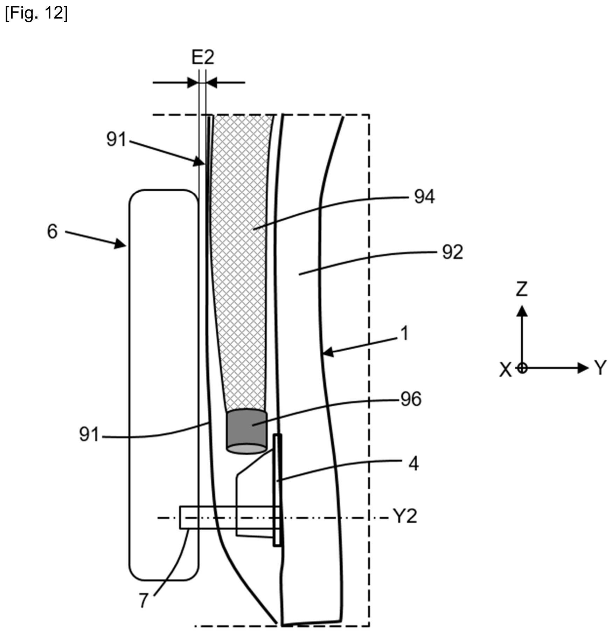

Comme visible à la figure 12, le sac gonflable latéral est logé en configuration pliée **94,** juste à l'extérieur du flasque latéral droit **92** du dossier. Le déploiement du sac gonflable latéral est déclenché par l'activation d'un allumeur **96** comme connu en soi.

Comme visible à la figure 2, l'accoudoir **6** comprend une première portion **61** s'étendant depuis le montage articulé **10** selon une première direction d'extension **W1** et une deuxième portion **62** prolongeant la première portion selon une deuxième direction d'extension **W2.**

Autrement dit, la deuxième portion **62** s'étend en oblique depuis la première portion **61.**

La deuxième direction d'extension **W2** est inclinée par rapport à la première direction d'extension **W1,** selon un angle d'au moins 60°, en pratique proche d'un angle droit.

Dit autrement, l'accoudoir **6** se présente généralement avec une forme en L, la première portion **61** est la plus petite et se trouve dans la position normale d'utilisation en posture montante depuis l'articulation, la deuxième portion **62** est plus longue et se trouve dans la position normale d'utilisation en position horizontal ou légèrement descendante vers l'avant, comme visible à la figure 1.

On note que la forme en L ne présente pas nécessairement un angle droit à l'intersection des deux portions.

Dans l'exemple illustré, la première portion **61** et la deuxième portion **62** sont raccordées par une zone coudée **63** avec des formes à transition douce.

Par rapport à l'articulation, on peut appeler la première portion 'portion proximale' et la deuxième portion 'portion distale'.

Comme visible à la figure 2, l'accoudoir **6** comprend une armature métallique **60,** une pièce support structurelle en plastique **65,** et un habillage en mousse **66.**

La longueur de la première portion **61** peut être comprise typiquement entre 100 mm et 180 mm. La longueur de la deuxième portion **62** peut être comprise typiquement entre 250 mm et 350 mm.

Le montage articulé comprend une platine **4** de fixation à l'armature de dossier. Le platine se présente comme une plaque épaisse fixée au flasque latéral **92** du dossier. Dans l'exemple illustré, la platine comporte des trous **45** en vis-à-vis de trous correspondants prévus dans le flasque latéral du dossier. Des boulons **14** solidarisent la platine **4** avec le flasque latéral **92** de dossier.

L'étrier **5** se présente comme une pièce à deux ailes **51,52** s'étendant de part et d'autre d'une partie centrale coudée **50** ayant la forme d'une portion de cylindre. Elle est obtenue à partir d'une plaque métallique cintrée.

Les deux ailes **51,52** s'étendent dans des plans respectifs qui sont séparés angulairement par un écart angulaire compris typiquement entre 50° et 60° dans l'exemple illustré.

L'étrier est soudé sur la platine au moyen de cordons de soudure **S** visibles à la figure 2.

Un palier tubulaire **8** est fixé sur l'étrier dans la zone coudée **50** de l'étrier. Le palier tubulaire **8** est centré sur **Y2.**

Le montage articulé comprend un étrier **5** soudé sur la platine **4.** L'étrier contribue à l'indexation des chacune des première et deuxième positions. L'étrier forme butée angulaire pour la came qui va être décrite maintenant. La première aile **51** forme butée pour la came et détermine la première position **P1** de l'accoudoir. La deuxième aile **52** forme butée pour la came et détermine la deuxième position **P2** de l'accoudoir.

On remarque que la platine **4,** l'étrier **5** et le palier tubulaire **8** sont solidaires du flasque latéral du dossier.

En outre, il est prévu un arbre **7** monté en rotation dans le palier tubulaire **8.** Cet arbre **7** est solidaire en rotation de l'armature **60** de l'accoudoir

Sur une extrémité de l'arbre est fixée une came **2,** la came 2 tourne avec l'arbre **7.** L'arbre **7** tourne avec la came et avec l'accoudoir. La came comprend une saillie locale **20** qui dépasse radialement vers l'extérieur par rapport au reste de la périphérie de la came.

L'arbre **7** comprend une première extrémité **71** sur laquelle est montée la came.

Sur l'extrémité opposée **72** de l'arbre est fixé l'armature d'accoudoir **60.**

On fait appel à une forme à méplat **75** avec un ou deux méplats pour assurer la transmission de couple entre d'une part l'arbre 7 et l'accoudoir 6 et d'autre part entre l'arbre **7** et la came **2.**

Le palier tubulaire présente une longueur comprise typiquement entre 50 mm et 80 mm, afin de supporter les efforts du montage en porte-à-faux de l'accoudoir. L'arbre 7 présente une longueur légèrement supérieure, il dépasse typiquement de 2 à 3 mm du côté de la came et de 3 à 4 millimètres du côté de l'armature d'accoudoir. Bien entendu, ces dimensions ne sont pas limitatives.

Il est prévu sur la partie stationnaire, c'est-à-dire fixée sur la platine et/ou sur l'étrier, un organe élastique **3** prévu pour coopérer avec la came afin de solliciter l'accoudoir en direction soit de la première position ou soit de la deuxième position.

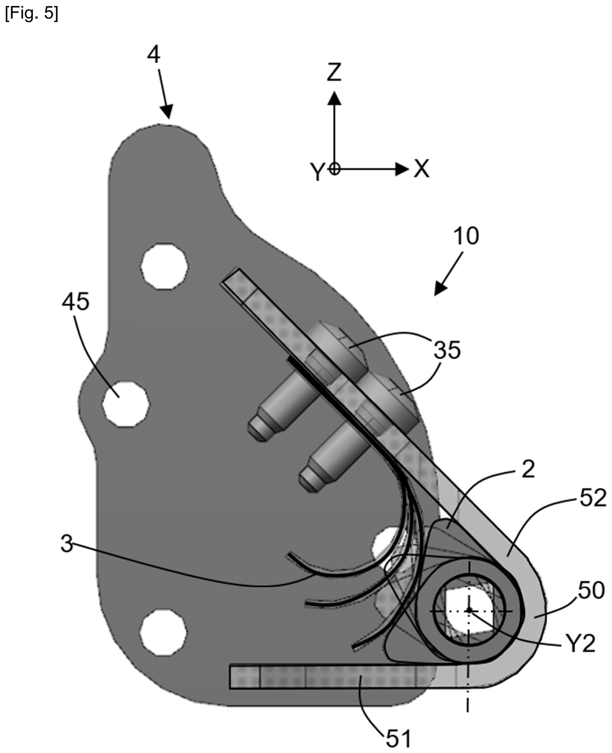

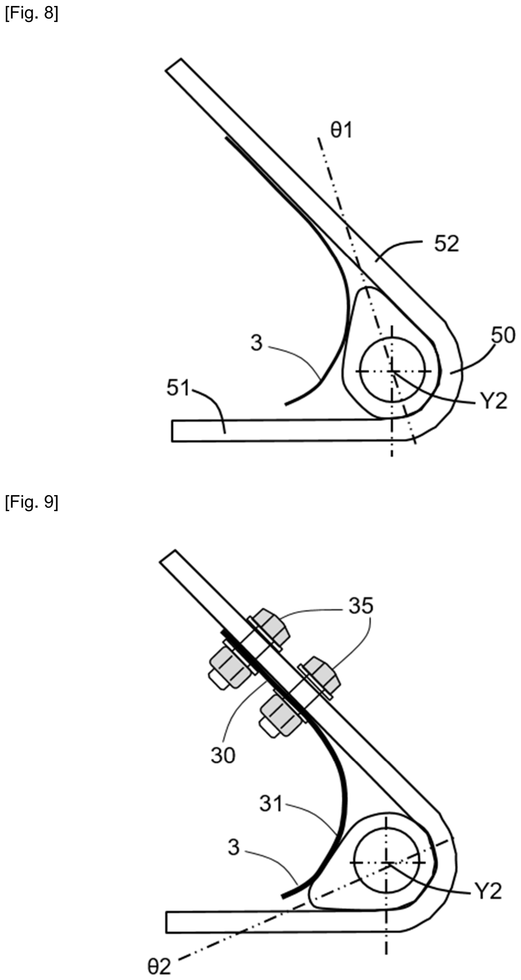

Dans l'exemple illustré aux figures 5, 8, 9 et 10, l'organe élastique **3** se présente comme un ressort à lame qui travaille en flexion. Le ressort à lame comprend une partie de fixation **30** qui est fixé solidairement à la deuxième aile **52** de l'étrier, et une portion de suivi de came notée **31** qui est en appui permanent sur la came. Dans l'exemple illustré, la partie de fixation **30** est fixée par au moins deux boulons **35.**

Il faut noter que la figure 5 illustre sur le même croquis trois positions différentes du ressort à lame 3 et plusieurs positions de la came 2.

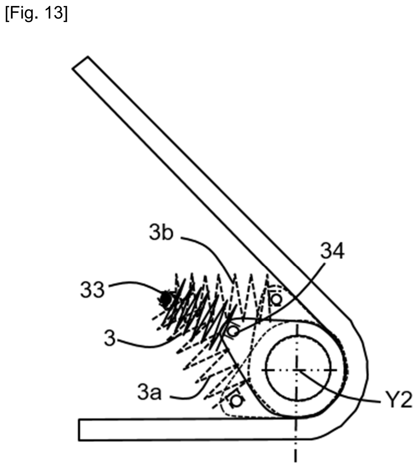

Dans l'exemple illustré à la figure 13, l'organe élastique se présente comme un ressort hélicoïdal travaillant en compression. Le ressort hélicoïdal est lié d'un côté à un point d'attache **33** fixe, relié solidairement à l'étrier **5.** Le ressort hélicoïdal est lié de l'autre côté à un point d'attache **34** mobile monté sur la came.

Le ressort hélicoïdal est représenté en trait plein dans la position de compression maximale (position instable). Le ressort hélicoïdal est représenté en trait pointillé dans la position **3a** correspondant à la première position de l'accoudoir. Le ressort hélicoïdal est aussi représenté en trait pointillé dans la position **3b** correspondant à la deuxième position du ressort hélicoïdal.

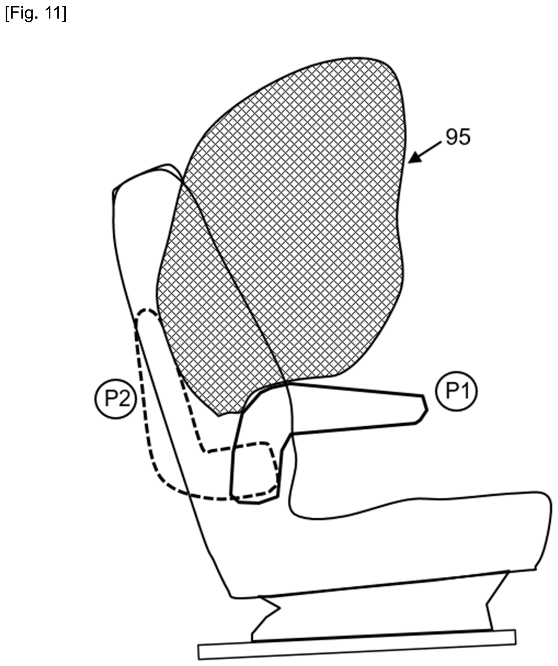

On a représenté sur la figure 11 une situation de déploiement du sac gonflable. On peut remarquer que le volume occupé **95** par le sac gonflé n'interfère pas avec la première position de l'accoudoir et n interfère pas non plus avec la deuxième position de l'accoudoir. En outre, le déploiement du sac n'est pas gêné par la présence de l'accoudoir.

Toujours en référence à la figure 11, il est prévu un intervalle de garde **E2** entre la face externe **91** matelassure du dossier et l'accoudoir **6,** le long de Y.

L'intervalle de garde **E2** vaut au moins 3 mm. La pose d'une housse de siège sur le dossier ne comble pas cet intervalle. Il n'y a donc pas de contact entre l'accoudoir et il faut que ce cette et la face externe latérale du dossier, un tel contact pourrait en effet empêcher l'accoudoir de rejoindre la deuxième position **P2.**

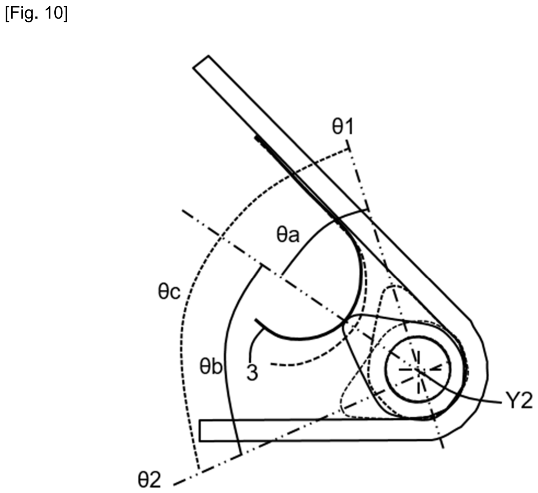

Comme déjà exposé, l'accoudoir 6 est déplaçable sur une course angulaire **θc** entre la première position P1 (angle **θ1**) et la deuxième position P2 (angle **θ2**). Comme visible à la figure 10, la course angulaire comprend une première plage angulaire **θa** où l'accoudoir 6 est rappelé par l'organe élastique 3 vers la première position **P1,** et une deuxième plage angulaire **θb** où l'accoudoir est rappelé par l'organe élastique vers la deuxième position **P2.**

Grâce aux dispositions présentées ci-dessus, la première position **P1** de l'accoudoir est mécaniquement stable et indexée, et la deuxième position **P2** est mécaniquement stable et indexée. A l'inverse, toutes les positions intermédiaires entre ces deux positions extrêmes sont mécaniquement instables.

S'agissant de la position qui se trouve à la frontière entre les 2 plages angulaires susmentionnées **θa**, **θb**, comme illustré à la figure 10, le roulage du véhicule automobile induit des vibrations qui vont nécessairement se répercuter vers le montage articulé qui relie de l'accoudoir à l'armature de dossier. Ces vibrations entraînent alors un basculement de l'étrier d'un côté ou de l'autre, vers une des positions extrêmes **P1** ou **P2,** le plus souvent vers la position abaissée.

On obtient ainsi l'effet recherché, à savoir que chacune des première et deuxième positions P1,P2 laisse libre un volume nécessaire au déploiement du sac gonflable depuis la zone latérale du dossier comme illustré à la figure 11.

On note que la platine 4, l'étrier 5, le palier tubulaire 8, l'arbre 7 et l'organe élastique 3 sont préférentiellement réalisés en métal, acier ou alliage léger. La platine 4 et l'étrier 5 sont fabriqués par découpage et pliage d'une tôle d'acier d'épaisseur typique comprise entre 2 et 3 mm. L'arbre 7 est une tige pleine et le palier tubulaire 8 est obtenu par sciage d'un profilé tubulaire classique.

## Revendications

1. Siège de véhicule comprenant une armature de dossier (1) montée pivotante sur une armature d'assise, le siège de véhicule étant équipé d'un sac gonflable d'un premier côté, le siège de véhicule étant situé dans un repère spatial orthogonal comprenant une direction verticale (Z), une direction longitudinale (X) et une direction transversale (Y),
le siège de véhicule comprenant un accoudoir (6) relié via un montage articulé (10) à l'armature de dossier (1), l'accoudoir étant situé sur le premier coté, l'accoudoir étant déplaçable entre une première position (P1) et une deuxième position (P2),
l'accoudoir comprenant une première portion (61) s'étendant depuis le montage articulé selon une première direction d'extension (W1) et une deuxième portion (62) prolongeant la première portion selon une deuxième direction d'extension (W2) inclinée angulairement par rapport à la première direction d'extension (W1), les première et deuxième positions (P1,P2) étant chacune mécaniquement stables et indexées alors que toutes les positions intermédiaires étant généralement mécaniquement instables, le montage articulé (10) comprenant un organe élastique (3) pour rappeler l'accoudoir vers la première position ou vers la deuxième position, chacune des première et deuxième positions laissant libre un volume nécessaire au déploiement du sac gonflable depuis une zone latérale du dossier sur le premier côté.

2. Siège de véhicule selon la revendication 1, dans lequel le montage articulé (10) est une articulation à pivotement, de préférence à axe transversal (Y2).

3. Siège de véhicule selon la revendication 2, dans lequel la première position (P1) est séparée angulairement de la deuxième position (P2) par un écart angulaire (θc) compris entre 90° et 120°, de préférence voisin de 110°.

4. Siège de véhicule selon l'une quelconque des revendications 2 à 3, dans lequel il est prévu une course angulaire entre la première position et la deuxième position, avec une première plage angulaire (θa) où l'accoudoir (6) est rappelé par l'organe élastique (3) vers la première position (P1), et une deuxième plage angulaire (θb) où l'accoudoir est rappelé par l'organe élastique vers la deuxième position (P2).

5. Siège de véhicule selon l'une quelconque des revendications 1 à 4, dans lequel le montage articulé comprend une platine (4) de fixation à l'armature de dossier.

6. Siège de véhicule selon la revendication 5, dans lequel le montage articulé comprend un étrier (5) soudé sur la platine (4), l'étrier contribuant à l'indexation des chacune des première et deuxième positions (P1,P2).

7. Siège de véhicule selon l'une quelconque des revendications 1 à 6, dans lequel le montage articulé comprend un arbre (7) solidaire de l'accoudoir, l'arbre étant muni d'une une came (2) coopérant avec l'organe élastique formé comme un ressort coopérant avec la came.

8. Siège de véhicule selon la revendication 6 et la revendication 7, dans lequel l'arbre (7) est reçu dans un palier tubulaire (8) soudé sur l'étrier (5).

9. Siège de véhicule selon la revendication 2, dans lequel il est prévu le long de la direction transversale (Y) un intervalle de garde (E2) entre la matelassure du dossier et l'accoudoir (6).

10. Véhicule comprenant un siège selon l'une quelconque des revendications 1 à 9.
